# EUROPÄISCHE PATENTSCHRIFT

(11) **EP 2 579 415 B1**
(45) Veröffentlichungstag und Bekanntmachung des Hinweises auf die Patenterteilung: **12.08.2015**
(21) Anmeldenummer: 12177084.6
(22) Anmeldetag: 19.07.2012
(51) Int. Cl.: H02J 3/14, H02J 3/38, F24D 11/00, F24D 19/10, H02J 13/00

(54) **Energieversorgungsnetz und Steuerverfahren zur Verteilung regenerativ erzeugter Stromenergie**
Energy supply network and control process for distributing regeneratively generated electric energy
Réseau d'alimentation en énergie et procédé de commande pour la répartition d'énergie électrique générée de manière régénérative

(30) Priorität: 05.10.2011 DE 102011054199
(43) Veröffentlichungstag der Anmeldung: 10.04.2013
(73) Patentinhaber: EnBW Energie Baden-Württemberg AG, 76131 Karlsruhe (DE)
(72) Erfinder: Ralf, Biehl, 76275 Ettlingen (DE); Wolfram, Münch, 76593 Gernsbach (DE)
(74) Vertreter: Kaufmann, Ursula Josefine

(56) Entgegenhaltungen:
- WO-A1-2007/046792
- US-A1- 2003 009 265
- US-A1- 2010 245 103
- US-A1- 2011 133 688

## Beschreibung

Die Erfindung betrifft ein Energieversorgungsnetz, eine Heizvorrichtung, eine Verteilvorrichtung sowie ein Steuerverfahren zur Verteilung elektrischer Energie aus regenerativen Energiequellen für eine Versorgung einer Mehrzahl von Verbrauchern nach dem Oberbegriff des Anspruchs 1.

### STAND DER TECHNIK

Aus dem Stand der Technik sind Energieversorgungsnetze zur Verteilung elektrischer Energie aus konventionellen und regenerativen Energiequellen bekannt, bei denen eine Mehrzahl von Verbrauchern, in der Regel Privathaushalte CP und industrielle Verbraucher CC mit elektrischer Energie versorgt werden. Hierzu ist bekannt, Verteilvorrichtungen vorzusehen, die ein Energieaufkommen der regenerativen und konventionellen Energiequellen messen und an die Verbraucher verteilen.

In diesem Zusammenhang werden unter regenerativen Energiequellen Windkraftanlagen, Photovoltaikanlagen, Wasserkraftanlagen, Gezeitenkraftanlagen, Energieanlagen basierend auf Geothermie, Biogas, Holzverwertung oder aus nachwachsender Biomasse verstanden, d.h. Energiequellen, die entweder kurzfristig von selbst erneuerbar sind oder deren Nutzung nicht zur langfristigen Erschöpfung der Quelle beiträgt. Diese Energiequellen haben größtenteils die Eigenschaft, nicht konstant eine gleichmäßige Menge von Energie zu liefern, sondern sind von Umwelteinflüssen, insbesondere Sonneneinstrahlung, Windaufkommen oder weiteren klimatischen und saisonalen Bedingungen abhängig, so dass deren Verteilung naturgemäß schwanken kann, und diese Schwankungen in Zeitbereichen von 1 bis 12 Stunden signifikant sein können, siehe insbesondere Photovoltaik oder Windkraftanlagen. Dahingegen sind konventionelle Energiequellen, wie Erdöl, Erdgas, Steinkohle, Braunkohle oder Kernenergie für die Abdeckung einer Grundlast über einen längeren Zeitraum hinweg planbar und ohne Rücksicht auf äußere Umwelteinflüsse zur langfristigen Energieversorgung nutzbar.

Um elektrische Netze gleichmäßig auszulasten ist aus dem Stand der Technik der Einsatz von fernsteuerbaren Haushaltsgeräte-Steuervorrichtungen bekannt, die beispielsweise als "Energiebutler" in Privathaushalten zur selektiven Inbetriebnahme von Großgeräten wie Waschmaschinen, Trocknern, Geschirrspüler oder Kühl- und Gefriergeräten dienen. Die Steuervorrichtungen empfangen periodisch, beispielsweise einmal am Tag, einen Stromtarifverlauf von einem Netzbetreiber, so dass je nach aktuell berechneten Stromtarif Geräte in vorbestimmbaren Zeiträumen ein- bzw. ausgeschaltet werden können, um einen Stromverbrauch energieintensiver Großgeräte in Zeiten eines günstigen Stromtarifs zu legen. Allerdings können diese Geräte nicht flexibel auf einen Überschuss bzw. Engpass von regenerativ erzeugter Stromenergie reagieren, des Weiteren kann die Energielast nicht effizient abgebaut werden, sofern kein Bedarf am Einsatz einer Waschmaschine, eines Trockners oder Kühlschranks besteht.

Daneben ist zur Verwertung überschüssiger regenerativer Energie beispielsweise aus der DE 10 2007 039 726 A1 bekannt, eine Einspeisumrichteranlage für Windenergieanlagen vorzusehen, deren Steuereinrichtung über eine Schnittstelle mit einem oder mehreren Verbrauchern, beispielsweise durch Funkübertragung oder über einen drahtgebundenen Datenkanal verbunden ist. Die Steuereinrichtung kann mit einer Messstelle am Übergangspunkt des Energieversorgungsunternehmens zum Hausnetz kommunizieren und zuschaltbare und regelbare elektrische Verbraucher im Haus zu- bzw. abschalten. So kann beispielsweise eine Wärmepumpe zur Vermeidung der Einspeisung überschüssiger Energie der Windkraftanlage im Stromnetz zugeschaltet werden, und diese Wärmepumpe kann zum Heizen oder Kühlen verwendet werden. Auch kann durch einen Lastwiderstand Wärme für eine Wasseraufbereitungsanlage oder zum Heizen bereitgestellt werden. Somit kann überschüssige elektrische Energie einer einzigen Windkraftanlage, die einem Verbraucher zugeordnet ist, zum Abbau von regenerativer Energie durch Erwärmung von Heiz- und Brauchwasser genutzt werden. Allerdings betrachtet diese Druckschrift lediglich eine einzige Windkraftanlage, die direkt an einen Verbraucher gekoppelt ist, so dass eine optimierte dynamische Verteilung überschüssiger Energie an eine Mehrzahl von Verbrauchern nicht angedacht ist.

Des Weiteren geht aus der EP 0 046 530 A ein Verfahren und eine Vorrichtung zur optimalen Nutzung mindestens einer variablen schwer beherrschbaren Energiequelle hervor, bei der abzuleitende überschüssige Energie einer regenerativen Energiequelle zur Heißwasserbereitung oder zur Elektrolyse von Wasser und zum Aufladen von Batterien eines Schiffes herangezogen werden kann. In dieser Druckschrift wird ein isoliertes Kleinenergieversorgungsnetz betrachtet, bei dem eine überschaubare Zahl von Verbrauchern an eine einzige regenerative Energiequelle angeschlossen ist.

Daneben betrachtet die DE 34 08 063 A1 eine Windturbine mit Generator, der elektrischen Strom unmittelbar an einen Heizkörper weiterleitet, um Wärme für einen Heißwasserspeicher bereitzustellen. Über eine Zusatzheizung kann Netzstrom bei Bedarf nachgeschaltet werden. Diese Druckschrift betrachtet ein direktes Verheizen von Strom, ohne dass dieser Strom abhängig von Lastaufkommen für das Stromnetz bzw. zu Heizzwecken eingesetzt werden kann.

In der DE 10 2009 013 739 A1 wird ein Verfahren zur Steuerung der Energiezufuhr einer individuellen Heizungsanlage betrachtet, die durch diverse angeschlossene Energiequellen beheizt werden kann. Unter anderem kann als Wärmeenergiequelle ein Heizstab dienen, der über elektrischen Strom betreibbar ist und für den Strom aus Windkraft oder Photovoltaik verwendet werden kann. Des Weiteren kann eine Wärmepumpe zur Wärmeerzeugung herangezogen werden, aber auch Gas, Öl oder Pellets bzw. Holz als Wärmequelle verwendet werden. Das Steuerverfahren dient dazu, die verschiedenen Energiequellen in Abhängigkeit diverser Parameter, wie beispielsweise Tageszeit, aktuelle Wetterlage, Sonnenstand etc. auszuwählen. So können zur Auswahl der diversen Energiequellen Informationen aus dem Internet abgerufen werden, um unter gewünschten Optimierungsgesichtspunkten, wie Kosten und Umweltschutz, die optimale Energieform zu verwenden. In der Heizungsanlage, die mit verschiedenen Medien beheizt werden kann, wird in Abhängigkeit dieser Parameter eine bevorzugte Energiequelle ausgewählt.

Aus der US 2008 0023 564 A1 geht eine gattungsgemäße Heizungsanlage hervor, die über eine Mehrzahl verschiedener Wärmeenergiequellen wie Heizer und Boiler verfügt, um ein einzelnes Heizungssystem für ein Wohnhaus zu beheizen. Auch in diesem Fall können die verschiedenen Energiequellen zur Senkung der Betriebskosten ausgewählt werden und hierzu Informationen, wie beispielsweise aktuelle Heizkosten der verschiedenen Energieträger berücksichtigt werden. Die einzelnen Energiequellen werden über Schütze und Schalter aktiviert. Dementsprechend betrifft diese Druckschrift ebenfalls eine individuelle Heizungsanlage, die mittels verschiedenen Wärmequellen betrieben werden kann, und deren Wärmequelle abhängig von externen Informationen lokal ausgewählt werden kann.

Des Weiteren betrifft die WO 2007 046 792 A1 eine einzelne Heizungsanlage mit zumindest einer Wärmepumpe und einer Zusatzheizeinrichtung, wie einem Gasbrenner, die in Abhängigkeit eines setzbaren Kriteriums, wie beispielsweise Preisänderungen zwischen den beiden Heizungsformen umschalten kann. Das Heizungssystem ist dazu ausgebildet, ein einzelnes Heizungssystem zu betreiben.

Die US 2003/0009265A1 beschreibt ein Energieverteilungsnetz für eine Kommune, in dem ein zentrales intelligentes Energieverteilungssystem Steuerbefehle an einzelne Haushaltsgeräte in Verbraucherhaushalten zur Aktivierung ihrer Funktion geben kann. Hierzu ist ein Communityserver vorgesehen, der über ein IP-Netzwerk mit einzelnen Haushaltsservern in Verbindung steht. Ein Haushaltsserver kann verschiedene strombasierte Haushaltsgeräte eines Verbraucherhaushalts wie Waschmaschine, Fahrzeugladegerät, zentrales Heizsystem beeinflussen, Hierdurch können einzelne Haushaltsgeräte je nach Strompreis oder Stromaufkommen aus lokalen regenerativen Energiequellen durch den Communityserver ferngesteuert entweder von Netzstrom oder von lokal verfügbarem Strom aus Solar-, Wind-, oder Wasserkraft bestromt werden, bzw. gänzlich ein- oder ausgeschaltet werden.

Aus der US 2010/0245103 A1 geht eine Benutzeranzeige und ein Steuerungsverfahren für ein Energiemanagement eines Verbraucherhaushaltes hervor, wobei der Verbraucherhaushalt eine erneuerbare Stromquelle wie Photovoltaikanlage aufweist. Es wird vorgeschlagen, eine Heizungs- und Warmwasservorrichtung des Verbraucherhaushalts, die mittels Gas und Strom beheizt werden kann, durch eine Steuerung derart zu steuern, dass bei günstigem Strompreis oder hoher zur Verfügung stehender Strommenge der erneuerbaren Stromquelle, eine Beheizung durch Strom vorgenommen werden kann.

Schließlich betrifft die US 2011/0133688 A1 eine Batteriesteuervorrichtung mit einer regenerativen Stromquelle eines Verbraucherhaushalts, die eine Stromerzeugungsprognose- und Stromverbrauchsprognoseeinheit umfasst, wobei eine Batterie geladen werden kann, sofern eine höhere Stromerzeugung als ein Stromverbrauch prognostiziert wird.

Somit ergibt sich aus dem Stand der Technik das Problem, dass überschüssige elektrische Energie aus Energiequellen mit kurzfristig stark schwankender Energiekapazität nicht dynamisch innerhalb eines weitverzweigten Energieverteilungsnetzes verteilt werden kann, und zu Überlast und Ausfall des Netzes führen kann. Zum anderen ergibt sich das Problem, dass kurzfristig auftretende günstige elektrische Energie nicht wirtschaftlich verwertet werden kann.

Ausgehend von dem oben genannten Stand der Technik ist es Aufgabe der Erfindung, ein Energieversorgungsnetz, eine Verteil- und Heizvorrichtung sowie ein Steuerverfahren vorzuschlagen, durch die im Falle des Auftretens übermäßiger regenerativer Energie durch eine Mehrzahl von regenerativen Energiequellen eine optimierte dynamische Verteilung der kurzfristig anfallenden überschüssigen Energie in einem großflächigen Stromversorgungsnetz an eine Mehrzahl von Verbrauchern zur Bereitstellung von Wärmeenergie erreicht werden kann.

Diese Aufgabe wird durch ein Energieversorgungsnetz, eine Heizvorrichtung, eine Verteilvorrichtung sowie ein Steuerverfahren nach den unabhängigen Ansprüchen gelöst. Vorteilhafte Weiterbildungen der Erfindung sind Gegenstand der Unteransprüche.

### OFFENBARUNG DER ERFINDUNG

Erfindungsgemäß wird ein Energieversorgungsnetz zur Verteilung elektrischer Energie aus konventionellen P und regenerativen Energiequellen S,W für die Versorgung einer Mehrzahl von Verbrauchern CC,CP vorgeschlagen, das zumindest eine, insbesondere mehrere Verteilvorrichtungen, die ein Energieaufkommen der regenerativen Energiequellen S,W messen und prognostizieren kann bzw. können, umfasst, und ein Teil der Verbraucher CC,CP über eine Heizvorrichtung verfügt. Die Heizvorrichtung weist eine Umschalteinrichtung zur Umschaltung zwischen einer Beheizung mit konventionellem Heizbrennstoff und Beheizung mit Strom auf Basis eines Steuersignals der Verteilvorrichtung auf.

Mit anderen Worten schlägt die Erfindung ein Energieversorgungsnetz vor, an das eine Mehrzahl von regenerativen und optional auch konventionellen Energiequellen angeschlossen ist. Konventionelle Energiequellen können beispielsweise Erdöl, Erdgas, Kohle, Kernkraft oder andere Fossilbrennstoff-Energiequellen sein. Regenerative Energiequellen können insbesondere Windkraft- oder Photovoltaikanlagen, aber auch Stromenergiequellen basierend auf Wasserkraft, Geothermie, Biogas oder ähnliches sein. Verteilvorrichtungen innerhalb des Energieversorgungsnetzes messen und prognostizieren eine zu erwartende Energiekapazität der regenerativen Energiequellen über eine gewisse Zeit in der Zukunft und können beispielsweise auf Basis von Klimadaten, historischen Stromlieferdaten oder Bereitstellung von weiteren Betreiberinformationen wie aktueller Strompreis/Brennstoffpreis abschätzen, wie viel Energie in kurzer Frist von 2 bis 24 Stunden, auch bis zu mehreren Tagen von den regenerativen Energiequellen in das Stromnetz abgebbar ist. Zumindest ein Teil der an dem Energienetz angeschlossenen Privathaushalten (CP = Consumer Private) und kommerziellen Stromverbrauchern (CC = Commercial Consumer) wie Industrieanlagen beinhalten eine Heizvorrichtung, die sowohl mit einem konventionellen Heizbrennstoff, beispielsweise Erdöl, Erdgas, Pellets, Holz oder ähnlichen Heizbrennstoffen befeuerbar ist, und über eine elektrische Heizvorrichtung, beispielsweise einen Durchlauferhitzer, eine Wärmepumpe, einen Heizstab im Heißwasserkessel oder ähnliches verfügt. Privathaushalte CP und kommerzielle Verbrauch CC können nicht nur einzelne Haushalte bzw. einzelne Industrieanlagen sondern auch Wohnblöcke, Stadtbezirke, Gemeinden oder ein großflächiger Besiedlungsraum sein, bzw. Industriekomplexe und größere Industrieansammlungen sein. Die Heizvorrichtung weist eine Umschalteinrichtung auf, die auf Basis eines von der Verteilervorrichtung generierten Steuersignals eine Umschaltung zwischen der konventionellen Heizung mit Heizbrennstoff und der Beheizung mit Strom vornehmen kann. Im Falle eines zu geringen Energieaufkommens der regenerativen Energiequellen kann benötigte Wärmeenergie durch Verbrennen des Heizbrennstoffs geliefert werden. Fällt aufgrund der saisonalen Schwankungen beispielsweise durch erhöhte Sonneneinstrahlung, starkem Wind, erhöhtem Wasserstand oder anderen Umwelteinflüssen eine erhöhte Stromproduktion durch regenerativen Energiequellen an, so kann die zusätzlich erzeugte Stromenergie in der Heizvorrichtung durch Aktivierung der Stromheizung "verheizt" werden. So kann die Verteilvorrichtung bei Messung bzw. Prognose eines überhöhten Energieaufkommens durch die regenerativen Energiequellen ein Steuersignal generieren, um überschüssige Energie in den Heizvorrichtungen zu verbrauchen und konventionellen Heizbrennstoff einzusparen. Die Verteilvorrichtung kann das Steuersignal lediglich an eine Untergruppe der angeschlossenen Verbraucher adressieren, um eine gleichmäßige regionale Stromauslastung des Energieversorgungsnetzes zu erreichen. So können insbesondere geographisch in der Nähe einer mit Hochlast betriebenen regenerativen Energiequelle befindliche Verbraucher zur Umschaltung auf eine Stromwärmeheizung adressiert werden, um eine Stromüberlast in weiteren Bereichen des Energieversorgungsnetzes zu verhindern. Auch kann ein Steuersignal beispielsweise auf Basis eines Unterschreitens eines Strommarktpreises gegenüber einem Gasmarktpreis für dieselbe Menge an erzeugbarer Wärmeenergie generiert werden, sofern eine Heizung mit Strom in diesem Falle günstiger als eine Heizung mit Gas pro Kilowatt Heizwärme ist. Somit ist eine flexible Hybridlösung zur Beheizung von Privat- und Industrieverbrauchern vorgeschlagen, bei der überschüssige Stromenergie durch regenerative Energiequellen in Wärmeenergie umgewandelt und hierdurch die Stromverteilung im Netz geglättet, niedrige Heizkosten erreicht und eine Einsparung an fossilem Heizbrennstoff ermöglicht wird.

Es ist allerdings auch alternativ oder zusätzlich denkbar, die überschüssige Stromenergie in anderen elektrischen Verbrauchern anstelle von Heizvorrichtungen in sinngemäß gleicher Weise flexibel umzusetzen. Beispielhaft aber nicht begrenzend seinen an dieser Stelle zum flexiblen Verbrauch überschüssiger regenerativer Energie genannt:
- Elektrolysevorrichtung insbesondere zur Erzeugung von Wasserstoff, z.B. zur Energiespeicherung, z.B. in chemischen Wasserstoffspeichern und späteren Energieverwertung oder für andere elektrochemische Prozesse, beispielsweise zur Gewinnung von Metallen oder zur Herstellung von Stoffen, deren Gewinnung durch rein chemische Prozesse teurer oder kaum möglich wäre. Beispiele wichtiger Elektrolysen sind die Gewinnung von Aluminium, Chlor und Natronlauge;
- Pumpenvorrichtung eines Pumpspeicherkraftwerkes zur Speicherung von Höhenenergie eines Wasserreservoirs oder zur Beladung eines Fluidspeicherkraftwerks, z. B. Kavernenspeicher oder Porenspeicher für Rohöl, Erdgas und Druckluft, für ein Adsorptionsspeicherkraftwerk oder auch zur unterirdischen Einlagerung von CO2;
- Aufladevorrichtung zur Stromspeicherung in hochkapazitiven galvanischen Zellen (Akkumulator, Batterie), Redox-Flow-Zellen, supraleitender magnetischen Energiespeichen, z.B. zum Betrieb einer Notstromanlage;
- Kühlungsvorrichtung zur Kühlung von Lagerhäusern oder großen Klimatisierungseinheiten;
- Antriebsvorrichtung zur Speicherung mechanischer Energie in großen Schwungmassenspeichereinheiten oder zur Gasverflüssigung.

Die obige Aufzählung ist nicht vollständig, wobei es sich von selbst versteht, dass die erfinderische Idee einer flexiblen Stromverwendung mit allen Arten kurzfristig zuschaltbarer Stromenergieverbraucher und Stromenergiewandler umsetzbar ist. Im Gegensatz zu den in dem Stand der Technik beschriebenen individualisierten Heizungssystemen betrifft die erfindungsgemäße Lehre somit ein Energieversorgungsnetz mit mindestens zwei oder mehreren räumlich getrennten Verbrauchern mit jeweils zugeordneter Heizvorrichtung, für die zentral und selektiv ein Umschalten zwischen verschiedenen Energieformen in den jeweiligen Heizvorrichtung vorgenommen werden kann, um regenerativ erzeugte Energie gleichmäßig zu verteilen und kostenoptimiert sowie optimiert bezüglich der Netzauslastung des Energieverteilungsnetzes für eine Vielzahl von Verbrauchern sicher zu stellen. Die Wahl der Energiequelle wird weder von der Heizvorrichtung selbst, noch von dessen lokalen Nutzer vor Ort getroffen, sondern ferngesteuert von einer Netz-Verteilvorrichtung und die Wärmeenergiequelle wird insbesondere hinsichtlich einer optimalen Energieverteilung und Netzauslastung gewählt. Dabei stehen nicht in erster Linie individuelle Vorteile bei der Nutzung der Heizvorrichtung sondern netzübergreifende Aspekte einer Lastverteilung und Energiequellennutzung im Energieversorgungsnetz im Vordergrund. Die Umschalteinrichtung ermöglicht einen netzbetreiberbasierten ferngesteuerten Zugriff auf die Wahl der Energiequelle einer einzelnen, an ein Energieversorgungsnetz angeschlossenen Heizvorrichtung, wodurch ein Netzbetreiber die Möglichkeit erhält, entsprechend einem gegenwärtig verfügbaren Energiemix eine Vielzahl von angeschlossenen Heizvorrichtungen in technisch wie wirtschaftlich sinnvoller Art und unter Berücksichtigung der Kapazität und Auslastung räumlich dezentral verteilter Energiequellen steuern zu können. Insbesondere bei schwankendem Energieaufkommen regenerativer Energiequellen oder bei Engpässen in der Gas- oder Stromversorgung kann eine sehr schnelle Umschaltung einer Vielzahl von Heizvorrichtungen in regional frei wählbaren Gebieten vorgenommen werden, so dass das Energieversorgungsnetz optimal ausgelastet werden kann.

Grundsätzlich kann eine Abschätzung eines zu erwartenden Stromaufkommens durch ein Energieverwaltungssystem erfolgen, und die Verteilvorrichtung zentral zur Abgabe eines Steuersignals ferngesteuert werden. Gemäß der Erfindung umfasst die Verteilvorrichtung eine Messeinheit für Wind-, Wetter-, Wasserstand oder ähnlichen Umwelteinflüssen und eine

Prognoseeinrichtung zur Abschätzung einer zu erwartenden Energielieferkapazität der erneuerbaren Energiequelle. Die Messeinheit kann beispielsweise eine lokale Wetterstation beinhalten, die Umweltdaten wie Bewölkung, Regenwahrscheinlichkeit, Sonneneinstrahlung, Luftdruck, Wasserstand oder ähnliche Umwelteinflüsse, die die Stromproduktion einer regenerativen Energiequelle beeinflusst, erfasst. Auf Basis der Umweltdaten oder auch empirisch durch Beobachtung des Strommengenverlaufs kann eine Prognoseeinrichtung für eine gewisse Zeitspanne in der Zukunft mit einer hohen Wahrscheinlichkeit eine Energiekapazität der regenerativen Energiequelle voraussagen, so dass die Erzeugung eines Umschaltsteuersignals in Abhängigkeit der zu erwartenden Energielieferkapazität erzeugt werden kann. So kann beispielsweise bei Lieferung von 70% bis 100% der Nennlast einer regenerativen Energiequelle über die nächsten 4 bis 6 Stunden von zwei oder mehreren regenerativen Energiequellen ein Steuersignal zur Umschaltung angeschlossener Heizvorrichtungen in der Nähe befindlicher Verbraucher erzeugt werden, um die über 70% bis 90% einer Maximalstrommenge liegende Energiemenge in Wärme umzuwandeln und entsprechend fossile Heizbrennstoffe einzusparen. Durch die Berücksichtigung von Umweltdaten kann eine zuverlässige und präzise Prognose der zu erwartenden Strommenge bereitgestellt werden.

Gemäß einer vorteilhaften Weiterbildung kann die Verteilvorrichtung eine Kommunikationseinrichtung umfassen, mit der eine Kommunikation mit einem übergeordneten Energieverwaltungssystem zur Meldung von Energieerzeugungsdaten an das Energieverwaltungssystem und zum Empfang von Umschaltparameterdaten von den Energieverwaltungssystem durchführbar ist. So umfasst das Energieversorgungsnetz zumindest eine, insbesondere mehrere Verteilvorrichtungen und in der Regel ein Energieverwaltungssystem, das zentrale Umschaltparameterdaten, beispielsweise aktueller Gaspreis, aktueller Strompreis, zentrale Erfassung von Umweltdaten für das gesamte Energieversorgungsnetz oder Teile hiervon, aktuelle Stromauslastung des Netzes, historische Daten über Energiebedarf zu vergleichbaren Tages- oder Jahreszeiten oder ähnliches speichern und bereitstellen kann. Während die Verteilvorrichtung lokal ein Mikroklima in räumlicher Nähe der regenerativen Energiequellen messen kann, kann das übergeordnete Energieverwaltungssystem globale Versorgungsnetzdaten, wie den Strompreis, Gaspreis oder Stromlastungsdaten, die von den Verteilvorrichtungen gemeldet werden können, speichern und an alle oder einzelne Verteilvorrichtungen verteilen. So kann ein Steuerbefehl der Verteilvorrichtung nicht nur aufgrund der lokal vorliegenden Erzeugungs- und Prognosedaten, sondern durch global verfügbare Daten des Energieverwaltungssystems erzeugt und an ausgewählte oder alle an die Verteilvorrichtung angeschlossene Verbraucher abgegeben werden. Die Umschaltparameterdaten können neben der durch die Prognoseeinrichtung prognostizierten Energielieferkapazität weitere Daten, wie beispielsweise eine prognostizierte Verbrauchsmenge einzelner Verbraucher oder des gesamten Energieversorgungsnetzes sowie Preisdaten bereitstellen, so dass bei Unterschreiten eines vorbestimmbaren Wärmeerzeugungspreises durch Strom gegenüber einem Wärmeerzeugungspreis durch einen Heizbrennstoff ein Steuersignal an den betreffenden Verbraucher versendet werden kann. Durch eine Adressierung des Steuersignals können beispielsweise eine Gruppe von Verbrauchern, die mit gasbetriebenen Heizungen ausgerüstet sind, gegenüber Verbrauchern, die mit Erdöl, Pellets oder sonstigen lokal gespeicherten Heizbrennstoffen ausgerüstet sind, unter anderen Bedingungen angesteuert und je nach Einkaufspreis des Heizbrennstoffs bei verschiedenen Strompreis- bzw. Brennstoffpreishöhen zur Umschaltung auf eine Stromwärmeerzeugung gesteuert werden.

Gemäß einer weiteren vorteilhaften Ausbildung des Energieversorgungsnetzes kann das Steuersignal ein Rundsteuersignal, ein Telefonsignal, ein Intemetsteuersignal oder ein Funksignal, bevorzugt ein Mobilfunksignal sein. Das Steuersignal kann als Broadcast-Signal an alle an der Verteilvorrichtung angeschlossene Verbraucher abgesendet, oder adressiert an einzelne Verbraucher zugestellt werden. Ein Rundsteuersignal beispielsweise als frequenzmoduliertes Powerline-Signal kann über bestehende Stromversorgungsleitungen an einen intelligenten Zähler eines Verbrauchers weitergegeben werden. Ein Telefon- bzw. Internetsignal kann über ein Modem, beispielsweise eine kupferdrahtgebundene DSL-Verbindung oder Glasfaserverbindung an ein angeschlossenes Rechnersystem oder einen intelligenten Zähler weitergegeben werden, um die Heizvorrichtung zu steuern. Als Funksignal kommen insbesondere WLAN, WiMAX oder Mobilfunkkommunikationsdienste, insbesondere HSPA- bzw. UMTS- sowie SMS-Dienste in Frage. Demzufolge kann drahtgebunden als auch drahtlos adressierbar oder Broadcast ein Steuersignal zur Umschaltung der Verbraucherheizvorrichtungen zwischen Heizbrennstoffbetrieb und Stromwärmebetrieb ausgesendet werden.

Vorteilhaft kann eine Heizvorrichtung eines Verbrauchers CC, CP, der an ein obenstehend beschriebenes Energieversorgungsnetz angeschlossenen sein. Die Heizvorrichtung umfasst einen brennstoffbasierten und einen strombasierten Wärmeerzeuger, wobei durch eine Umschalteinrichtung zwischen brennstoff- und strombasierter Wärmeerzeugung umgeschaltet werden kann. Ein Umschaltsignal wird von einer Energienetz-Verteilervorrichtung E empfangen. Je nach Art des Steuersignals kann das Umschaltsignal drahtlos oder drahtgebunden, beispielsweise über Internet oder Mobilfunk empfangen werden, und beispielsweise mit Hilfe eines intelligenten Zählers ausgewertet und zur Umschaltung an eine Heizvorrichtung weitergeleitet werden. Die Heizvorrichtung weist grundsätzlich einen brennstoffbasierten Wärmeerzeuger, beispielsweise eine Gastherme, eine Öltherme, eine Pelletheizung, eine Holzheizung, eine Kohleheizung oder ähnliches auf, und verfügt des Weiteren über einen strombasierten Wärmeerzeuger, beispielsweise einen Durchlauferhitzer, einen elektrischen Heizstab oder ähnliches, wobei insbesondere im gleichen Wärmekreislauf umlaufendes Wärmefluid sowohl durch den brennstoffbasierten Wärmeerzeuger als auch durch den strombasierten Wärmeerzeuger erwärmt werden kann. Eine Nachrüstung eines konventionellen brennstoffbasierten Wärmeerzeugers durch einen strombasierten Wärmeerzeuger ist beispielsweise durch Zwischenschaltung eines Durchlauferhitzers oder Einbau eines elektrischen Heizstabes in einen Warmwasserkessel einfach durchführbar.

Die Umschalteinrichtung kann eine Umschalteinheit umfassen, die ein Schaltmittel K1 zur Schaltung des elektrischen Wärmeerzeugers und ein Schaltmittel K2 zur Schaltung des brennstoffbasierten Wärmeerzeugers schalten kann. Somit wird eine zentrale Umschalteinrichtung in der Heizvorrichtung vorgeschlagen, in der eine Umschalteinheit zum einen einen elektromagnetischen Schütz K1 zur Zuschaltung des Wärmeerzeugers und zum anderen ein schaltbares Brennstoff-Dosierventil K2 oder ähnliches zur Zuschaltung des brennstoffbasierten Wärmeerzeugers schalten kann. Dabei ist vorteilhaft denkbar, im Falle eines erhöhten Wärmebedarfs parallel elektrische und brennstoffbasierten Wärmeerzeuger zuzuschalten, um eine erhöhte Heizleistung zur Verfügung zu stellen, beispielsweise in Falle eines erhöhten Wärmeenergiebedarfs in kalten Wintertagen. Somit können zum einen fossile Heizenergieträger eingespart, zum anderen Stromnetzte entlastet und eine hohe Wärmeleistung zur Verfügung gestellt werden. Des Weiteren können Heizungsvorrichtungen kleiner dimensioniert werden, da im Bedarfsfall auf einen Parallelbetrieb beider Wärmeerzeuger zurückgegriffen werden kann.

Ferner kann die Umschalteinrichtung mit einer I/O-Interfaceeinheit verbunden sein, die eine drahtgebundene Verbindung, insbesondere Telefon-, Internet-, Rundsteuer- oder Powerline-Technik und/oder eine drahtlose Verbindung, insbesondere Mobilfunk, WLAN, WiMAX oder ähnliches mit einer Verteilvorrichtung herstellen kann. Die I/O-Interfaceeinheit dient zum Empfang eines adressierten bzw. eines Broadcast-Steuersignals zur Umschaltung zwischen Strom- und Brennstoffwärmeerzeugung. Sie kann als drahtgebundene I/O-Interfaceeinheit, beispielsweise in einem intelligenten Zähler untergebracht sein, und einen Anschluss an ein Telefon- oder Internetmodem umfassen. Sie kann unmittelbar an eine Energieversorgungsleitung angeschlossen sein, um ein Rundsteuer- oder Powerline-Signal einer Verteilvorrichtung zu empfangen. Daneben ist der Empfang durch eine drahtlose Verbindung, insbesondere durch einen Mobilfunkkanal, beispielsweise als SMS-Information, als UMTS- oder HSDPA-Datensignal denkbar, wobei in dicht besiedelten Gebieten auch der Einsatz von WLAN-Rundsteuerempfängem bzw. WiMAX-Funksignalempfängem denkbar ist. Die I/O-Interfaceeinheit kann insbesondere bidirektional ausgelegt sein, und Bedarfsdaten für den benötigten Bedarf an elektrischer Heizenergie an die Verteilvorrichtung und die Menge des stromerzeugten Heizwassers an die Verteilvorrichtung zur Tarifierung melden. Bevorzugt ist die I/O-Interfaceeinheit als Teil eines intelligenten Zählers ausgeführt und baulich getrennt von der Heizungsvorrichtung angeordnet.

Weiterhin kann die Umschalteinrichtung eine Umschaltfreigabeeinheit umfassen, die eine Umschaltung in Abhängigkeit von Heizvorrichtungsfreigabeparametern, insbesondere Wärmeenergiebedarf, verfügbare Brennstoffmenge, Brennstoffkosten oder ähnliches freigibt bzw. verhindert. Die Umschaltfreigabeeinheit kann beispielsweise eine Umschaltung freigeben, wenn ein von der Verteilvorrichtung übermittelter Strompreis zur Erzeugung einer Wärmeenergieeinheit niedriger als ein Heizbrennstoffpreis eines lokal verfügbaren Heizbrennstoffs, beispielsweise Öl, Pellets oder Holz ist. Da der Preis eines lokal verfügbaren Heizbrennstoffs von einem in der Vergangenheit liegenden Einkaufszeitpunkt abhängt, kann es für einzelne Heizvorrichtungen günstiger sein, auf Basis eines verteilten Steuersignals erst dann eine Umschaltung vorzunehmen, wenn der Strompreis entsprechend abgesunken ist. Somit wird eine ökonomisch günstigere Bereitstellung von Heizenergie, insbesondere bei lokal gelagerten Heizbrennstoffen, wie Ölheizungen, Kohleheizungen, Holzheizungen, Pellet- Heizungen oder ähnlichen ermöglicht, so dass Heizkosten eines Verbrauchers deutlich gesenkt werden können.

In einem nebengeordneten Aspekt der Erfindung wird eine Verteilvorrichtung zur Verteilung von elektrischer Energie in einem Energieversorgungsnetz vorgeschlagen, wobei die Verteilvorrichtung eine Prognoseeinrichtung umfasst, die bevorzugt eine Messeinheit für Wind-, Wetter-, Wasserstand oder ähnlichen Umweltdaten umfasst, und die ein Energieaufkommen einer, insbesondere mehrerer, regenerativer Energiequellen messen und über einen Zeitraum von 1 Stunde bis mehreren Tagen, insbesondere 2 bis 24 Stunden, bevorzugt 2 bis 12 Stunden prognostizieren kann. Die Verteilvorrichtung umfasst des Weiteren eine Kommunikationseinrichtung, die auf Basis des prognostizierten Energieaufkommens ein Steuersignal zur Umschaltung einer Heizvorrichtung nach einem der vorgenannten Ausführungsbeispiele ausgeben kann. An die Verteilvorrichtung sind üblicherweise ein oder mehrere regenerative Energiequellen, wie Windkrafträder, eine Photovoltaikfarm, ein Gezeitenkraftwerk oder ähnliches zur Einspeisung an das Energieversorgungsnetz angeschlossen. Die Prognoseeinrichtung nimmt eine Abschätzung einer in einem begrenzten Zeitraum in der Zukunft zur Verfügung stehenden Energiemenge, die von den regenerativen Energiequellen geliefert werden kann, vor. Eine Kommunikationseinrichtung kann, sofern die zu erwartende Energiemenge eine einstellbare Mindestenergiemenge unterschreitet, ein Steuersignal zur Umschaltung der Heizvorrichtungen auf einen Strombetrieb generieren, und dieses adressiert oder als Broadcast-Signal an einzelne oder alle angeschlossenen Verbraucher des Energienetzes bzw. an die an der Verteilvorrichtung angeschlossenen Verbraucher weitergeben.

In einer vorteilhaften Ausgestaltung der Verteilvorrichtung kann die Kommunikationseinheit Umschaltparameterdaten von dem Energieverwaltungssystem empfangen und das Steuersignal in Abhängigkeit des prognostizierten Energieaufkommens und in Abhängigkeit der Umschaltparameterdaten, insbesondere Netzauslastung, erwarteter Energiebedarf, Strompreis, Gaspreis oder ähnliches ausgeben. Somit schlägt diese Weiterbildung vor, dass das Steuersignal nicht nur auf Basis des prognostizierten Energieaufkommens der angeschlossenen regenerativen Energiequellen, sondern auf Basis von Umschaltparameterdaten, wie Netzauslastung, zu erwartender Energiebedarf im Netz, monetäre Kostendaten, wie Strompreis, Gaspreis oder ähnlichen erzeugt wird. Hierzu kann die Kommunikationseinheit nicht nur eine Kommunikation zu den einzelnen Heizvorrichtungen der Verbraucher, sondern auch zu einem zentralen Energieverwaltungssystem bereitstellen, die beispielsweise als Funknetzverbindung oder als drahtgebundene Verbindung, beispielsweise Powerline-, Internet- oder Telefonverbindung ausgelegt sein kann.

Schließlich betrifft die Erfindung in einem nebengeordneten Aspekt ein Verfahren zur Steuerung eines Energieversorgungsnetzes, wobei eine Verteilvorrichtung bei Prognose einer erhöhten Energiekapazität der regenerativen Energiequellen ein Steuersignal zur Umschaltung der Heizvorrichtung auf eine strombasierte Wärmeerzeugung und nach Feststellung einer sinkenden Energiekapazität unter einen vorbestimmbaren Wert ein Steuersignal zur Rückschaltung der Heizvorrichtung auf eine brennstoffbasierte Wärmeerzeugung ausgibt. Das erzeugte Steuersignal kann bei Überschreiten bzw. Unterschreiten einer prognostizierten Energiekapazität der regenerativen Energiequellen eine Umschaltung bzw. Rückschaltung auf eine brennstoff- bzw. strombasierte Wärmeerzeugung bewirken. Somit wird eine effiziente Stromverteilung, Entlastung des Stromnetzes von Energiespitzen und lokal begrenzt stattfindender Verbrauch von regenerativem Strom sowie Einsparung von Heizbrennstoff ermöglicht werden.

In einer vorteilhaften Weiterbildung des Verfahrens wird vorgeschlagen, dass die Verteilvorrichtung das Steuersignal adressieren kann, und an eine auswählbare Gruppe von Verbrauchern adressiert, insbesondere an eine Gruppe in regionaler Nähe der regenerativen Energiequellen, oder an eine Gruppe im Bereich eines niedrig belasteten Stromnetzes. Somit wird vorgeschlagen, dass die Verteilvorrichtung nun an eine Untergruppe von angeschlossenen Verbrauchern das Steuersignal ausgeben kann, die je nach Lage der Verbraucher im Verhältnis zu den regenerativen Energiequellen im Energieverteilungsnetz in räumlicher Nähe liegen, um eine erhöhte Strombelastung in weiten Bereichen des Energienetzes zu verhindern, oder den übermäßig erzeugten regenerativen Strom in einen Bereich des Energienetzes weiterzuleiten, der niedrig belastet ist, um somit hoch belastete Bereiche zu entlasten. Dies führt dazu, dass eine gleichmäßige Auslastung des Energieverteilungsnetzes erreicht werden kann, Stromverluste gesenkt und regenerative Energie effizient ausgenutzt werden kann.

In einer weiteren vorteilhaften Ausbildung des Verfahrens kann die Erzeugung des Steuersignals zur Umschaltung bzw. Rückschaltung des Weiteren auf Basis von Umschaltparameterdaten des übergeordneten Energieverwaltungssystems, insbesondere Preisdaten, Mengendaten, Netzauslastung oder ähnliches erfolgen.

Gemäß einer weiteren vorteilhaften Ausbildung des Verfahrens kann der Heizbrennstoff Gas aus einem Gasversorgungsnetz sein, wobei die Umschaltparameter gasversorgungsbezogene Daten, wie Ausfall des Gasnetzes, aktuelle Gaspreise oder ähnliches umfassen können. Wird der Heizbrennstoff ebenfalls über ein Versorgungsnetz geliefert, wie dies beispielsweise bei Gasversorgungsnetzen der Fall ist, so können Umschaltparameter selbst bei hohem Strompreis, d.h. bei niedriger Verfügbarkeit regenerativer Stromenergie, ein Umschalten auf strombasierte Heizwärme bewirken, beispielsweise bei einem Versorgungsengpass oder Ausfall von Teilen des Gasversorgungsnetzes, oder bei Erhöhung des Gaspreises im Winter, so dass eine wirtschaftliche Nutzung der hybriden Heizversorgung erreicht werden kann.

Gemäß einer vorteilhaften Weiterbildung der Erfindung kann ein Zeittakt zur Erzeugung des Steuersignals zur Um- bzw. Rückschaltung größer als eine Stunde, bevorzugt größer als zwei Stunden, jedoch kleiner als 24 Stunden, bevorzugt kleiner als 12 Stunden sein. Es wird vorgeschlagen, das Zeitintervall, mit dem ein Steuersignal abgesetzt bzw. rückgesetzt wird, in einem Bereich von 2 bis 24, insbesondere 2 bis 12 Stunden, zu legen, in diesem Zeitbereichen ist eine zuverlässige Abschätzung einer zu erwartenden Energiekapazität durch regenerative Energiequellen auf Basis von Wind- oder Wetterdaten möglich, so dass ein kurzfristiger Marktpreis für die zu erwartende Energiemenge ermittelt und somit eine ökonomisch wie technisch optimierte Entscheidung der Energieverwertung getroffen werden kann. Des Weiteren kann durch diese Langfristprognose von mehr als zwei Stunden ein effizienter Betrieb der Heizvorrichtung, die in der Regel träge und nicht in kürzeren Zeitintervallen ohne Verluste umschaltbar ist, vorgenommen werden. Schließlich kann in diesen Zeitintervallen eine flexible Netzauslastung, Stromüberschussproduktion vermieden und niedrige Energietransportkosten erreicht werden.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine schematische Darstellung eines ersten Ausführungsbeispiels eines erfindungsgemäßen Energieversorgungsnetzes;
- **Fig. 2**: eine Blockdigrammdarstellung eines Ausführungsbeispiels einer erfindungsgemäßen Heizvorrichtung;
- **Fig. 3**: eine Blockdiagrammdarstellung eines Ausführungsbeispiels einer erfindungsgemäßen Verteilvorrichtung

In den Figuren sind gleiche oder gleichartige Komponenten mit gleichen Bezugszeichen beziffert.

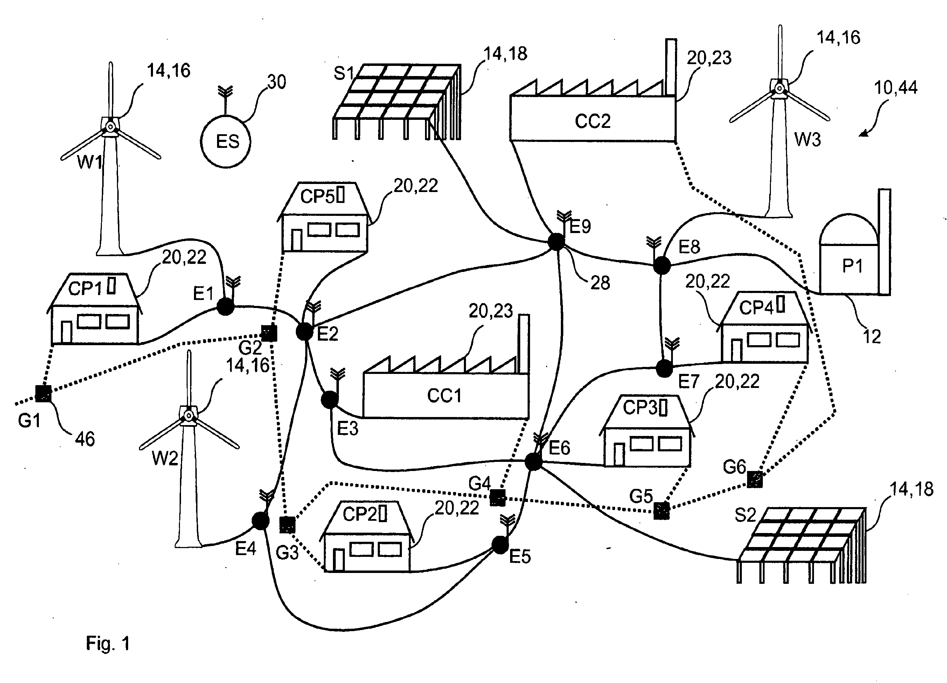

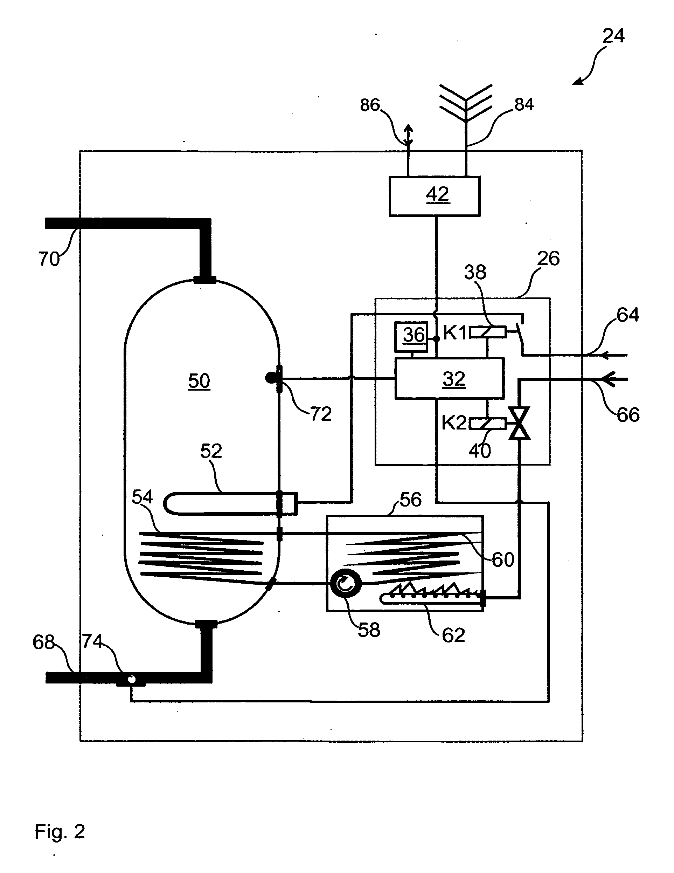

In der Fig. 1 ist schematisch ein Energieversorgungsnetz 10 (durchgezogene Linie) und ein Gasversorgungsnetz 44 (gepunktete Linie) dargestellt. In das Energieversorgungsnetz 10 speisen konventionelle Energiequellen 12, beispielsweise ein Kohlekraftwerk, und regenerative Energiequellen 14, beispielsweise eine Windkraftanlage 16 W, oder eine Photovoltaikanlage 18 S Strom ein. Der Strom, der von der Windkraftanlage 16 W1, W2 und W3 sowie von den Photovoltaikanlagen 18 S1 und S2 erzeugt wird, wird von Verteilervorrichtungen 28 E gemessen und die zu erwartende Energiekapazität über die nächsten Stunden prognostiziert. An den Verteilvorrichtungen 28 sind private Haushalte 22 CP1 bis CP5 (Gemeinden, Stadtbezirke) sowie kommerzielle Verbraucher 23 CC1, CC2 (Industrieparks) als Verbraucher 20 angeschlossen. Jede Windkraftanlagen 16 W1 bis W2 kann eine Mehrzahl von Windkrafträdern umfassen, d.h. ein Windkraftpark sein. Jede Photovoltaikanlage 18 S1, S2 kann mehreren Photovoltaikeinheiten umfassen bzw. einer Solarfarmsein. Die Haushaltsverbraucher 22 CP1 bis CP5 können aus einer Ansammlung einzelner Wohnhäuser bzw. Wohnblöcken, Gemeinden oder Stadtteilen bzw. Städten bestehen. Die kommerziellen Verbraucher 23 CC1, CC2 können einzelne Fabriken bzw. Fabrikkomplexe oder große Gewerbegebiete sein. Zumindest einzelne Privathaushalte bzw. kommerzielle Verbraucher 22, 23 CP1 bis CP5, CC1, CC2 kann eine umschaltbare Heizvorrichtung, wie in Fig. 2 dargestellt, beinhalten, in der auf Basis eines funkübertragenen Steuersignals eine Umschaltung zwischen Brennheizstoff und Stromwärmeerzeugung bewirkt werden kann. Ein Gasversorgungsnetz 44 umfasst eine Vielzahl von Gasverteilvorrichtungen 46 G1 bis G6, an denen Verbraucher 22, 23 CC, CP zur Brennstoffversorgung angeschlossen sind. Die Heizvorrichtungen der einzelnen Verbraucher 22, 23 können bei Bedarf zwischen einem Gasbetrieb und einem Strombetrieb umgeschaltet werden. Ein übergeordnetes Energieverwaltungssystem 30 ES steht in drahtloser Verbindung mit der Vielzahl von Verteilvorrichtungen 28 E1 bis E9, und kann Tarifdaten, wie den aktuellen Gastarif, den aktuellen Stromtarif, Wetterprognosedaten oder Informationen der Netzauslastung an die Verteilvorrichtungen 28 übermitteln bzw. von den Verteilvorrichtungen 28 die erwartete Energiekapazität und Stromeinspeisemenge empfangen und die Netzauslastung analysieren. Eine Verteilvorrichtung 28 kann mittels einer Prognoseeinrichtung zumindest über einen Zeitraum von 2 bis 6 Stunden eine zu erwartende Energiekapazität einer angeschlossenen regenerativen Energiequelle 14 prognostizieren, und im Falle einer höheren Energieproduktion als ein festgelegter Schwellenwert bzw. ein daraus resultierender sinkender Strompreis, der einen Gaspreis für die Erzeugung der gleichen Wärmeeinheit unterschreitet, kann ein Steuersignal drahtlos an die (nicht dargestellten) Heizvorrichtungen der Verbraucher 22, 23 abgegeben werden. Dabei können Heizvorrichtungen von Verbrauchern 20, die in räumlicher Nähe zu der regenerativen Energiequelle 14 angeordnet sind, auf Strombetrieb umgeschaltet werden. Alternativ können Verbraucher 20 in Netzbereichen, in denen eine niedrige Stromlast auftritt, auf Strom- statt Gasverbrauch umgeschaltet werden, um die Stromlast im Netz zu verteilen. Steigt der Gaspreis aufgrund saisonaler Engpässe beispielsweise im Winter an, kann bzw. können bei der Erzeugung einer Mindestmenge an regenerativem Strom einzelne bzw. alle Verbraucher auf Stromheizung umgeschaltet werden. Wird eine Überlastung des Stromnetzes in Teilbereichen erkannt, können einzelne Verbraucher zurück auf Gasheizung umgeschaltet werden. Durch die flexible Umschaltung zwischen Gas- und Stromwärmeerzeugung kann eine gleichmäßige Auslastung, eine Abfederung von Stromleistungsspitzen sowie ein niedriger Heizpreis für die einzelnen Verbraucher erreicht werden. Die Versorgungssicherheit wird durch die redundante Heizungsauslegung erhöht und die Kosten für die einzelnen Verbraucher werden gesenkt.

In Fig. 2 ist schematisch ein Ausführungsbeispiel einer Heizvorrichtung 24 dargestellt, in der auf Basis eines Steuersignals zwischen einer brennstoffversorgten und einer elektrischen Wärmeerzeugung zur Erwärmung von Heizwasser in einem Heizkessel 50 umgeschaltet werden kann. Der Heizkessel 50 umfasst einen Heizungswasserzulauf 68 sowie einen Heizungswasserablauf 70, wobei am Heizungswasserzulauf 68 ein Zulaufthermometer 74 angeordnet ist. Des Weiteren ist im Inneren des Heizkessels 50 ein Kesselthermometer 72 angeordnet, wobei die beiden Thermometer 72, 74 mit einer Umschalteinrichtung 26 zur Regelung der Heizwassertemperatur in Verbindung stehen. Im unteren Bereich des Heizkessels 50 sind ein Kesselfluidwärmetauscher 54 sowie ein elektrischer Heizstab 52 angeordnet. Der elektrische Heizstab 52 kann über ein Schütz 38 mit einem Stromanschluss 64 verbunden sein und damit erwärmt werden, um das Wasser im Kessel 50 zu erwärmen. Das Wärmefluid des Wärmetauschers 54 wird in einer Gastherme 56 durch einen Gasbrenner 62 erwärmt, wodurch ein Erwärmungswärmetauscher 60 beheizt und durch eine Pumpe 58 das Fluid zwischen Erwärmungswärmetauscher 60 und Kesselwärmetauscher 54 transportiert wird, um Heizwasser im Kessel 50 aufzuheizen. Das Gas zum Betrieb des Gasbrenners 62 der Gastherme 56 wird durch ein elektromagnetisches Gasventil 40 der Umschalteinrichtung 26 gesteuert. Der Schütz 38 sowie das elektromagnetische Gasventil 40 sind an eine Umschalteinheit 32 der Umschalteinrichtung 26 angeschlossen, die über eine I/O-Interfaceeinheit 42 ein Steuersignal empfangen kann. Die I/O-Interfaceeinheit 42 ist mit einer Verbindung 86 an ein Telefonnetz bzw. Datennetz wie Internet angeschlossen und über eine Mobilfunkantenne 84 drahtlos an ein Funknetz zum Empfang von Steuersignalen einer Verteilvorrichtung 28 gekoppelt. Die Umschalteinheit 32 empfängt über die IO-Interfaceeinheit 42 ein Steuersignal zur Umschaltung zwischen Gas- und Stromheizbetrieb, und ist mit einer Umschaltfreigabeeinheit 36 gekoppelt, die ein Umschalten verhindern kann, falls ein lokal gespeichertes Heizbrennmedium wie Öl, Holzpellets oder ähnliches einen niedrigeren Kostenpreis als der gegenwärtig zur Verfügung stehende Strompreis aufweist. Die Umschalteinheit kann auf Basis der von den Thermometern 72, 74 gemessenen Heiztemperatur und Basis des Steuersignals sowohl den Schütz K1 für den Strombetrieb als auch das Ventil K2, 38, 40 für den Gasbetrieb öffnen bzw. schließen. Im Falle eines ungewöhnlich kalten Winters können parallel beide Heizkreisläufe durch Betätigung von K1, K2 38, 40 aktiviert werden.

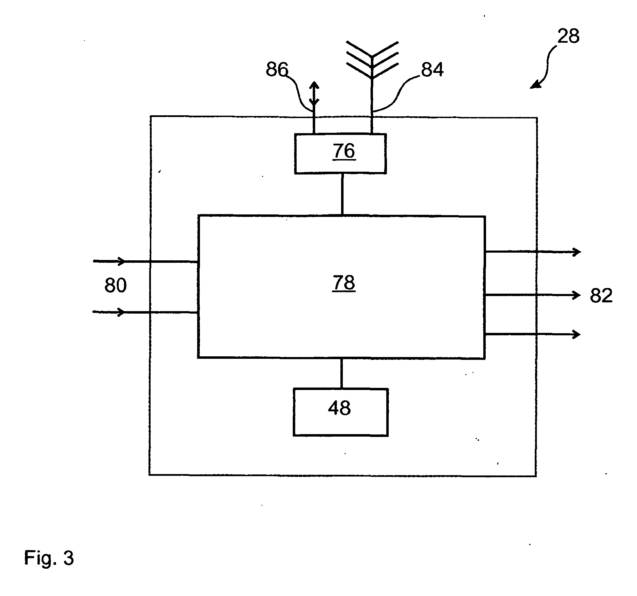

In Fig. 3 ist schematisch eine Verteilvorrichtung 28 dargestellt, die eine IO-Kommunikationseinrichtung 76 umfasst, die über eine drahtgebundene Leitung 86 mit einem Internetanschluss und über eine Mobilfunkantenne 84 mit einem Mobilfunknetz zum Senden und Empfangen von Daten ausgerüstet ist. Die Kommunikationseinrichtung 76 kann Steuersignaldaten einer Mess- und Verteileinrichtung 78 an angeschlossene Heizvorrichtungen 24 von Verbrauchern ausgeben und von den Heizvorrichtungen Verbrauchs- bzw. Bedarfsdaten empfangen und des weiteren Umschaltparameterdaten eines Energieverwaltungssystems 30 empfangen. Die Mess- und Verteileinrichtung 78 kann eine gelieferte Menge regenerativer Stromenergie der angeschlossenen regenerativen Energiequellen 14 messen, die über Zuleitungen 80 an die Verteilvorrichtung 28 eingespeist wird, und kann diese über Ableitungen 82 an die angeschlossenen Verbraucher 20 verteilen. Zur Prognose einer zur erwartenden Energiekapazität in den nächsten Stunden ist an die Mess- und Verteileinrichtung 78 eine Prognoseeinrichtung 78 angeschlossen, die Umweltdaten, wie Wetter, Sonneneinstrahlung, Wasserstand oder Wettervorhersage zur Erzeugung des Steuersignals berücksichtigen kann. Die Umweltdaten können über die Kommunikationseinrichtung 76 von dem Energieverwaltungssystem 30 empfangen oder über lokale Wettermesssensoren ermittelt werden. Auf Basis der prognostizierten Energiekapazität wird ein Steuersignal über die Kommunikationseinrichtung 76 an die angeschlossenen Verbraucher 20 ausgeben, um von Strom- auf Brennstoffbetrieb umzuschalten bzw. zurückzuschalten.

Die Erfindung ermöglicht ein flexibles Energiemanagement von strom- und brennstofferzeugter Wärme einzelner Verbraucher auf Basis einer schwankenden Stromproduktion einer oder mehrerer regenerativer Energiequellen, und ermöglicht eine Senkung eines Heizbrennstoffverbrauchs, eine gleichmäßige Auslastung eines Stromnetzes sowie einen wirtschaftlich optimierten Verbrauch überschüssiger regenerativer Stromenergie.

## Patentansprüche

1. Energieversorgungsnetz (10) zur Verteilung elektrischer Energie aus konventionellen P (12) und regenerativen Energiequellen S, W (14) für die Versorgung einer Mehrzahl von Verbrauchern CC, CP (20) umfassend zumindest eine Verteilvorrichtung E (28), insbesondere mehrere Verteilvorrichtungen E (28), die ein Energieaufkommen der regenerativen Energiequellen S, W (14) prognostiziert und mittels einer Messeinheit (88) für einen Wind-, Wetter-, Wasserstand oder ähnliche Umwelteinflüsse misst, wobei zumindest ein Teil der Verbraucher CC, CP (20) über eine Heizvorrichtung (24) verfügt, **dadurch gekennzeichnet,**
**dass** zumindest eine Mehrzahl räumlich dezentral verteilter regenerativer Energiequellen S, W (14) wie Windkraft-, Photovoltaik-, Wasserkraft-, Geothermie-, und/oder Biogasanlagen vorgesehen ist,
**dass** das Energieversorgungsnetz (10) ein großflächiges Stromversorgungsnetz ist, in dem die Verbraucher CC, CP (20) mit jeweils zugeordneter Heizvorrichtung räumlich getrennt angeordnet sind;
**dass** die zumindest eine Verteilvorrichtung (28) eine Prognoseeinrichtung (48) zur Abschätzung einer zu erwartenden Energielieferkapazität der emeuerbaren Energiequellen S, W (14) umfasst und eine Wahl der Energieform für die jeweilige Heizvorrichtung (24) hinsichtlich einer optimalen Energieverteilung und Netzauslastung trifft und die Prognoseeinrichtung (48) eine zu erwartende verteilbare Energielieferkapazität der regenerativen Energiequellen S, W (14) über eine gewisse Zeit in der Zukunft auf Basis von Klimadaten und/oder historischen Stromlieferdaten und/oder Betreiberinformationen prognostiziert;
**dass** die Heizvorrichtung (24) eines jeweiligen Verbrauchers CP CC (20) eine Umschalteinrichtung (26) zur Umschaltung zwischen einer Beheizung mit konventionellem Heizbrennstoff und Beheizung mit Strom auf Basis eines Steuersignals der Verteilvorrichtung E (28) umfasst und das Steuersignal zumindest auf Basis einer aktuellen oder zu erwartenden Energielieferkapazität der regenerativen Energiequellen S, W (14) zur Lastverteilung im Energieversorgungsnetz (10) erzeugbar ist; und
**dass** das Umschalten zwischen verschiedenen Energieformen in der jeweiligen Heizvorrichtung (24) zentral und selektiv für die jeweilige Heizvorrichtung (24) ferngesteuert durch die Verteilvorrichtung E (28) vornehmbar ist, um regenerativ erzeugte Energie gleichmäßig im Energieversorgungsnetz (10) zu verteilen.

2. Energieversorgungsnetz nach Anspruch 1, **dadurch gekennzeichnet, dass** die Verteilvorrichtung E (28) eine Kommunikationseinrichtung (76) umfasst, mit der eine Kommunikation mit einem übergeordneten Energieverwaltungssystem ES (30) zur Meldung von Energieerzeugungsdaten an das Energieverwaltungssystem ES (30) und zum Empfang von Umschaltparameterdaten von dem Energieverwaltungssystem ES (30) durchführbar ist.

3. Energieversorgungsnetz nach einem der vorangegangene Ansprüche,
**dadurch gekennzeichnet, dass** das Steuersignal ein Rundsteuersignal, ein Telefonsignal, ein Internetsteuersignal oder ein Funksignal, bevorzugt ein Mobilfunksignal ist.

4. Verteilvorrichtung E (28) zur Lastverteilung von elektrischer Energie in einem Energieversorgungsnetz (10) nach einem der Ansprüche 1 bis 3, die Verteilvorrichtung aufweisend eine Prognoseeinrichtung (48) zur Abschätzung einer zu erwartenden Energielieferkapazität der emeuerbaren Energiequellen S, W (14), die eine zu erwartende verteilbare Energielieferkapazität der regenerativen Energiequellen S, W (14) über eine gewisse Zeit in der Zukunft auf Basis von Klimadaten und/oder historischen Stromlieferdaten und/oder Betreiberinformationen prognostiziert sowie durch eine Kommunikationseinrichtung (76), die auf Basis des prognostizierten Energieaufkommens ein Steuersignal zur Umschaltung einer Heizvorrichtung (24) ausgeben kann, wobei die Heizvorrichtung (24) einen brennstoffbasierten Wärmeerzeuger (56) und einen strombasierten Wärmeerzeuger (52) umfasst, wobei durch eine Umschalteinrichtung (26) zwischen brennstoff- und strombasiertem Wärmeerzeuger (52, 56) umgeschaltet werden kann, **dadurch gekennzeichnet, dass** die Veneilvorrichtung E (28) eine Wahl der Energiequelle ferngesteuert für die jeweilige Heizvorrichtung (24) zentral und selektiv für die jeweilige Heizvorrichtung (24) hinsichtlich einer optimalen Energieverteilung und Netzauslastung trifft, um regenerativ erzeugte Energie gleichmäßig im Energieversorgungsnetz (10) zu verteilen.

5. Verteilvorrichtung nach Anspruch 4, **dadurch gekennzeichnet, dass** die Kommunikationseinheit (76) Umschaltparameterdaten von dem Energieverwaltungssystem ES (30) empfangen kann, und das Steuersignal in Abhängigkeit des prognostizierten Energieaufkommens und in Abhängigkeit der Umschaltparameterdaten, insbesondere Netzauslastung, erwarteter Energiebedarf, Strompreis, Gaspreis oder ähnliches ausgeben kann.

6. Verfahren zur Lastverteilungssteuerung eines Energieversorgungsnetzes (10) nach einem der Ansprüche 1 bis 3, **dadurch gekennzeichnet, dass** eine Verteilvorrichtung E (28) bei einer Prognose einer erhöhten Energielieferkapazität der regenerativen Energiequellen S, W (14) ein Steuersignal zur Umschaltung einer Heizvorrichtung (24) eines jeweiligen Verbrauchers CP CC (20) auf eine strombasierte Wärmeerzeugung und nach Feststellung einer sinkenden Energielieferkapazität unter einen vorbestimmbaren Wert ein Steuersignal zur Rückschaltung der Heizvorrichtung (24) auf eine brennstoffbasierte Wärmeerzeugung ausgibt, wobei die Verteilvorrichtung E (28) eine Wahl der Energieform für die jeweilige Heizvorrichtung (24) hinsichtlich einer optimalen Energieverteilung und Netzauslastung trifft und das Umschalten zwischen verschiedenen Energieformen in der jeweiligen Heizvorrichtung (24) zentral und selektiv für die jeweilige Heizvorrichtung (24) ferngesteuert durch die Verteilvorrichtung E (28) vorgenommen wird, um regenerativ erzeugte Energie gleichmäßig im Energieverteilungsnetz (10) zu verteilen.

7. Verfahren nach Anspruch 6, **dadurch gekennzeichnet, dass** die Verteilvorrichtung E (28) das Steuersignal adressieren kann, und an eine auswählbare Gruppe von Verbrauchern CP, CC (20) adressiert, insbesondere an eine Gruppe in regionaler Nähe zu der regenerativen Energiequelle S, W (14) oder an eine Gruppe im Bereich eines niedrigbelasteten Stromnetzes S, W adressiert.

8. Verfahren nach Anspruch 6 oder 7, **dadurch gekennzeichnet, dass** die Erzeugung des Steuersignals zur Umschaltung bzw. Rückschaltung des Weiteren auf Basis von Umschaltparameterdaten des übergeordneten Energieverwaltungssystems ES (30), insbesondere Preisdaten, Mengedaten, Netzauslastung oder ähnliches erfolgt.

9. Verfahren nach Anspruch 8, **dadurch gekennzeichnet, dass** der Heizbrennstoff Gas aus einem Gasversorgungsnetz (44) ist, wobei die Umschaltparameter gasversorgungsbezogene Daten, wie Ausfall des Gasnetzes, aktueller Gaspreis oder ähnliches erfassen können.

10. Verfahren nach einem der vorgenannten Ansprüche 6 bis 9, **dadurch gekennzeichnet, dass** ein Zeittakt zur Erzeugung des Steuersignals zur Um- bzw. Rückschaltung größer als eine Stunde, bevorzugt größer als zwei Stunden, jedoch kleiner als 24 Stunden, bevorzugt kleiner als 12 Stunden ist.

## Claims

1. Energy supply network (10) for the distribution of electrical energy from conventional P (12) and regenerative energy sources S, W (14) for supplying a plurality of consumers CC, CP (20), comprising at least one distribution device E (28), in particular several distribution devices E (28), forecasting an energy production by the regenerative energy sources S, W (14) and measuring it by means of a measuring unit (88) for a wind strength, weather state or water level or similar environmental influences, where at least some of the consumers CC, CP (20) have a heating device (24), **characterized in**
**that** at least a plurality of spatially decentrally distributed regenerative energy sources S, W (14), such as wind, photovoltaic, hydroelectric, geothermal and/or biogas power stations, is provided;
**that** the energy supply network (10) is a large-area electricity supply network in which the consumers CC, CP (20) and their associated heating device are arranged spatially separated ;
**that** the at least one distribution device (28) comprises a forecasting unit (48) for assessing an expected energy delivery capacity of the renewable energy sources S, W (14), and makes a choice of the energy form for the respective heating device (24) with regard to an optimum energy distribution and network utilization, and the forecasting unit (48) forecasts an expected distributable energy delivery capacity of the regenerative energy sources S, W (14) over a certain time in the future on the basis of climate data and/or historical electricity supply data and/or operator information;
**that** the heating device (24) of a respective consumer CP, CC (20) comprises a switching device (26) for switching between heating with conventional heating fuel and heating with electricity on the basis of a control signal of the distribution device E (28), and the control signal can be generated at least on the basis of a current or expected energy delivery capacity of the regenerative energy sources S, W (14) for load distribution inside the energy supply network (10); and
**that** switching between different energy forms in the respective heating device (24) can be performed centrally and selectively for the respective heating device (24) and remotely controlled by the distribution device E (28) in order to distribute regeneratively generated energy evenly inside the energy supply network (10).

2. Energy supply network according to claim 1, **characterized in that** the distribution device E (28) comprises a communication unit (76) with which communication can be conducted with a higher-level energy management system ES (30) for the reporting of energy generation data to the energy management system ES (30) and for the receiving of switching parameter data from the energy management system ES (30).

3. Energy supply network according to one of the preceding claims, **characterized in that** the control signal is a ripple control signal, a telephone signal, an internet control signal or a radio signal, preferably a mobile radio signal.

4. Distribution device E (28) for load distribution of electrical energy in an energy supply network (10) according to one of claims 1 to 3, said distribution device having a forecasting unit (48) for the assessment of an expected energy delivery capacity of the renewable energy sources S, W (14), which forecasts an expected distributable energy delivery capacity of the regenerative energy sources S, W (14) over a certain time in the future on the basis of climate data and/or historical electricity supply data and/or operator information, and a communication unit (76), which can on the basis of the forecast energy production emit a control signal for switching over a heating device (24), where said heating device (24) comprises a fuel-based heat generator (56) and an electricity-based heat generator (52), where a switching device (26) permits switching between fuel-based and electricity-based heat generators (52, 56), **characterized in that** the distribution device E (28) makes a choice of the energy source by remote control for the respective heating device (24) centrally and selectively for the respective heating device (24) with regard to an optimum energy distribution and network utilization, in order to distribute regeneratively generated energy evenly inside the energy supply network (10).

5. Distribution device according to claim 4, **characterized in that** the communication unit (76) can receive switching parameter data from the energy management system ES (30) and can emit the control signal depending on the forecast energy production and depending on the switching parameter data, in particular network utilization, expected energy requirement, electricity price, gas price or the like.

6. Method for load distribution control of an energy supply network (10) according to one of claims 1 to 3, **characterized in that** a distribution device E (28) emits, whenever an increased energy delivery capacity of the regenerative energy sources S, W (14) is forecast, a control signal for switching over a heating device (24) of a respective consumer CP, CC (20) to electricity-based heat generation and, after detection of an energy delivery capacity falling below a predeterminable value, a control signal for switching the heating device (24) back to a fuel-based heat generation, where the distribution device E (28) makes a choice of the energy form for the respective heating device (24) with regard to an optimum energy distribution and network utilization, and switching between different energy forms in the respective heating device (24) is performed centrally and selectively for the respective heating device (24) and remotely controlled by the distribution device E (28), in order to distribute regeneratively generated energy evenly inside the energy distribution network (10).

7. Method according to claim 6, **characterized in that** the distribution device E (28) can assign an address to the control signal, and address it to a selectable group of consumers CP, CC (20), in particular to a group in regional proximity to the regenerative energy source S, W (14) or to a group in the area of a low-stressed electricity network S, W.

8. Method according to claim 6 or 7, **characterized in that** the control signal for switching over or back is furthermore generated on the basis of switching parameter data of the higher-level energy management system ES (30), in particular price data, quantity data, network utilization or the like.

9. Method according to claim 8, **characterized in that** the heating fuel gas is from a gas supply network (44), where the switching parameters can include gas supply-related data such as failure of the gas network, the current gas price or the like.

10. Method according to one of the aforementioned claims 6 to 9, **characterized in that** a timing cycle for generating the control signal for switching over or back is longer than one hour and preferably longer than two hours, but shorter than 24 hours and preferably shorter than 12 hours.

## Revendications

1. Réseau d'alimentation en énergie (10) pour la distribution d'énergie électrique produite à partir de sources d'énergie conventionnelles P (12) et renouvelables S, W (14) pour l'alimentation d'une multitude de consommateurs CC, CP (20), comprenant au moins un dispositif de répartition E (28), en particulier plusieurs dispositifs de répartition E (28), pronostiquant une quantité de sources d'énergie renouvelables S, W (14) et mesurant à l'aide d'une unité de mesure (88) l'état du vent, de la météo, de l'eau ou des impacts environnementaux similaires, sachant qu'au moins une partie des consommateurs CC, CP (20) dispose d'un dispositif de chauffage (24), **caractérisé en ce**
**qu'**il est prévu au moins une pluralité de sources d'énergie renouvelables décentralisées S, W (14), telles que des centrales éoliennes, photovoltaïques, hydro-électriques, géothermiques, et/ou de production de biogaz ;
**que** le réseau d'alimentation en énergie (10) est un vaste réseau électrique, dans lequel les consommateurs CC, CP (20) et leur dispositif de chauffage respectivement associé sont disposés espacés les uns des autres ;
**qu'**au moins un dispositif de répartition (28) comprend un dispositif de pronostic (48) permettant d'estimer une capacité d'approvisionnement par les sources d'énergie renouvelables S, W (14) attendue et de choisir la forme d'énergie pour le dispositif de chauffage (24) respectif afin d'obtenir un répartition de l'énergie et une utilisation du réseau optimales et que le dispositif de pronostic (48) pronostique une capacité d'approvisionnement par les sources d'énergie renouvelables S, W (14) attendue pouvant être distribuée à l'avenir sur une période déterminée en se basant sur les données climatiques et/ou les données historiques de fourniture d'électricité et/ou les informations de l'opérateur ;
**que** le dispositif de chauffage (24) d'un consommateur respectif CP CC (20) comprend un système de commutation (26) permettant de permuter entre un chauffage avec un combustible conventionnel et un chauffage électrique sur la base d'un signal de commande du dispositif de répartition E (28) et que le signal de commande peut être généré au moins sur la base d'une capacité d'approvisionnement par les sources d'énergie renouvelables S W (14) actuelle ou attendue afin de répartir les charges dans le réseau d'alimentation en énergie (10) ; et
**que** la permutation entre les diverses formes d'énergie du dispositif de chauffage respectif (24) peut être effectuée de manière centralisée et sélective pour le dispositif de chauffage respectif (24) et télécommandée par le dispositif de répartition E (28) en vue de répartir uniformément l'énergie produite par les sources renouvelables dans le réseau d'alimentation en énergie (10).

2. Réseau d'alimentation en énergie selon la revendication 1, **caractérisé en ce que** le dispositif de répartition E (28) comprend un dispositif de communication (76) permettant une communication avec un système de gestion d'énergie superposé ES (30) pour la transmission de données de production d'énergie au système de gestion d'énergie ES (30) et pour la réception des paramètres régissant la commutation par le système de gestion d'énergie ES (30).

3. Réseau d'alimentation en énergie selon l'une des précédentes revendications, **caractérisé en ce que** le signal de commande est un signal de télécommande centralisé, un signal téléphonique, un signal de commande via internet ou un signal radio, de préférence un signal de radiocommunication mobile.

4. Dispositif de répartition E (28) permettant la répartition des charges de l'énergie électrique dans un réseau d'alimentation en énergie (10) selon l'une des revendications 1 à 3, ledit dispositif de répartition présentant un dispositif de pronostic (48) servant à l'estimation d'une capacité d'approvisionnement énergétique attendue des sources d'énergie renouvelables S, W (14), et pronostiquant une capacité d'approvisionnement en sources d'énergie renouvelables S, W (14) attendue pouvant être distribuée à l'avenir sur une période déterminée en se basant sur les données climatiques et/ou les données historiques de fourniture d'électricité et/ou les informations de l'opérateur, ainsi qu'un moyen d'un dispositif de communication (76) qui, sur la base de la quantité d'énergie pronostiquée, peut délivrer un signal de commande permettant de permuter un dispositif de chauffage (24), sachant que le dispositif de chauffage (24) comprend un générateur de chaleur à base de combustible (56) et un générateur de chaleur électrique (52), sachant qu'il est possible de permuter au moyen d'un système de commutation (26) entre le générateur de chaleur à base de combustible (56) et le générateur de chaleur électrique (52), **caractérisé en ce que**, pour le dispositif de chauffage respectif (24), le dispositif de répartition E (28) choisit de manière centralisée et sélective la source d'énergie télécommandée pour le dispositif de chauffage respectif (24), en vue d'obtenir ainsi une répartition de l'énergie et une utilisation du réseau optimales afin de répartir uniformément l'énergie produite par les sources renouvelables dans le réseau d'alimentation en énergie (10).

5. Dispositif de répartition selon la revendication 4, **caractérisé en ce que** l'unité de communication (76) peut réceptionner les paramètres de commutation du système de gestion d'énergie ES (30) et peut générer le signal de commande en fonction de la quantité d'énergie pronostiquée et en fonction des paramètres de commutation, notamment du taux d'utilisation du réseau, des besoins d'énergie attendus, du prix de l'électricité, du gaz ou similaires.

6. Procédé de commande de la répartition des charges d'un réseau d'alimentation en énergie (10) selon l'une des revendications 1 à 3, **caractérisé en ce que**, lors d'un pronostic d'une augmentation de la capacité d'approvisionnement énergétique des sources d'énergie renouvelables S, W (14), un dispositif de répartition E (28) délivre un signal de commande permettant de permuter un dispositif de chauffage (24) d'un consommateur respectif CP CC (20) sur une génération de chaleur électrique et en cas de constatation d'une baisse de la capacité d'approvisionnement énergétique sous un seuil prédéfini délivre un signal de commande pour recommuter le dispositif de chauffage (24) sur une génération de chaleur au moyen d'un combustible, sachant que le dispositif de répartition E (28) choisit la forme d'énergie pour le dispositif de chauffage respectif (24) en vue d'obtenir un répartition de l'énergie et une utilisation du réseau optimales et que la permutation entre les diverses formes d'énergie du dispositif de chauffage respectif (24) est effectué de manière centralisée et sélective pour le dispositif de chauffage respectif (24) et télécommandée par le dispositif de répartition E (28) afin de répartir uniformément l'énergie produite par les source renouvelables dans le réseau d'alimentation en énergie (10).

7. Procédé selon la revendication 6, **caractérisé en ce que** le dispositif de répartition E (28) peut affecter une adresse au signal de commande et l'adresser à un groupe de consommateurs CP, CC (20) pouvant être sélectionné, en particulier à un groupe à proximité régionale des sources d'énergie renouvelables S, W (14) ou à un groupe situé dans le secteur d'un réseau électrique peu sollicité S, W.

8. Procédé selon la revendication 6 ou 7, **caractérisé en ce que** la génération du signal de commande pour la commutation ou le retour à l'état initial se fait en outre sur la base des paramètres de commutation du système de gestion d'énergie superposé ES (30), en particulier en fonction des données en matière de prix, de quantité, de taux d'utilisation du réseau ou similaire.

9. Procédé selon la revendication 8, **caractérisé en ce que** le combustible de chauffage est du gaz provenant d'un réseau de distribution de gaz (44), sachant que les paramètres de commutation peuvent tenir compte des données se référant à la distribution du gaz, telles que panne du réseau gazier, prix actuel du gaz ou similaire.

10. Procédé selon l'une des revendications précédentes 6 à 9, **caractérisé en ce qu'**un temps de cycle permettant la génération du signal de commande pour une commutation ou un retour à l'état initial est supérieur à une heure, de préférence supérieur à deux heures, mais inférieur à 24 heures, de préférence inférieur à 12 heures.
